# FASCICULE DE BREVET EUROPEEN

(11) **EP 3 302 934 B1**
(45) Date de publication et mention de la délivrance du brevet: **21.10.2020**
(21) Numéro de dépôt: 16727379.6
(22) Date de dépôt: 26.05.2016
(51) Int. Cl.: B29C 65/18, B29C 65/10, B29C 53/50, B29C 53/84, B65D 35/08, B29L 23/20, B29L 9/00, B29K 23/00, B29K 67/00

(54) **DISPOSITIF DE FABRICATION D'UNE JUPE DE TUBE DÉCORÉE AVEC UNE SOUDURE LATÉRALE ESTHÉTIQUE**
VORRICHTUNG ZUR HERSTELLUNG EINES MIT ÄSTHETISCHER SEITLICHER NAHT DEKORIERTEN TUBENKÖRPERS
DEVICE FOR PRODUCING A TUBE SKIRT DECORATED WITH AN AESTHETIC LATERAL WELD

(30) Priorité: 29.05.2015 FR 1554850
(43) Date de publication de la demande: 11.04.2018
(73) Titulaire: Albéa Services, 92230 Gennevilliers (FR)
(72) Inventeur: HINTZ, Martin, 96049 Bamberg (DE); DIPPOLD, Wilhelm, 96110 Schesslitz (DE); SUVARNA, Sudheer, Kent DA11 8FF (GB)
(74) Mandataire: Gevers & Orès
(86) Numéro de dépôt international: PCT/EP2016/061956
(87) Numéro de publication internationale: WO 2016/193128

(56) Documents cités:
- DE-U1-202011 050 417
- DE-U1-202011 050 418
- FR-A- 1 418 537

## Description

### Domaine de l'invention

L'invention concerne un outillage permettant la mise en œuvre du procédé de fabrication de la jupe de tube souple décorée.

La bande utilisée dans le cadre de la présente invention comprend classiquement plusieurs couches de matières différentes, qui combinent les différentes fonctions que doit remplir une jupe de tube, à savoir la souplesse, l'aptitude à conserver sa forme déformée, la barrière à la diffusion (en particulier imperméabilité à la vapeur d'eau), le support d'impression pour la décoration, etc.

En effet, l'apparence extérieure et la décoration sont très importants dans le domaine des tubes souples, en particulier pour les produits cosmétiques et de toilette. Les tubes doivent présenter des surfaces extérieures décorées, incluant des effets métalliques, holographiques, de brillance, et avec une grande palette de couleurs.

Les tubes souples sont fabriqués à partir d'une bande plane multicouche qui est roulée pour obtenir un manchon appelé jupe de tube. Le roulage est effectué de telle sorte que la bande est mise en forme de cylindre, les bordures latérales de ladite bande étant mises en regard l'une de l'autre puis soudées entre elles en formant une soudure latérale.

Une tête de tube, comportant un orifice de distribution, est ensuite soudée à une extrémité de ladite jupe. Le tube ainsi réalisé est livré au conditionneur, la tête en bas et son orifice de distribution étant obturé - par exemple par une capsule vissée sur le goulot. Le conditionneur remplit le tube en versant le produit à conditionner par l'extrémité restée ouverte du tube. Une fois le tube rempli, son extrémité ouverte est aplatie puis soudée.

La décoration du tube est présente sur la bande plane, avant sa transformation en jupe de tube. La difficulté réside dans l'obtention d'une soudure latérale qui soit la plus esthétique possible, c'est-à-dire la moins visible et avec une décoration allant au plus près de la soudure de part et d'autre, tout en garantissant une robustesse dans la soudure afin d'éviter que du produit contenu dans le tube ne puisse par la suite fuir ou être pollué par de l'humidité ou autre.

### Etat de la technique

Il existe plusieurs techniques de réalisation d'une soudure latérale d'une jupe de tube.

La première consiste à positionner les deux extrémités latérales de la bande en bord à bord, puis de les souder :
- soit en ayant préalablement biseauté les bords de manière à ce qu'ils viennent s'ajuster l'un contre l'autre asymétriquement
- soit en ajoutant un ruban au niveau de la jointure entre les bords

Cette technique requière une haute précision quant au positionnement bord à bord, ce qui est malheureusement rarement le cas car le guidage de la bande n'est pas évident dans les dispositifs de fabrication de jupe de tube.

La seconde technique consiste à recouvrir un bord avec l'autre bord : il s'agit d'un process avec recouvrement (« overlap »). Dans ce cas, la précision quant au positionnement est moins importante, ce qui facilite le process. L'inconvénient principal est qu'il est généralement nécessaire d'éviter toute décoration dans la zone de recouvrement à cause de son manque de résistance aux conditions de soudage. Il en découle une ligne d'une certaine largeur non décorée visible le long du tube dans la région de la soudure. De plus le cordon de soudure est généralement bien visible depuis l'extérieur, et inesthétique.

Pour résoudre ce problème, il est connu de placer une couche décorative entre une couche supérieure scellable et une couche inférieure de support, afin qu'elle ne soit pratiquement pas endommagée lors de l'étape de la soudure latérale. Dans ce cas, la couche décorative s'étend sur toute la superficie de la bande. Cette couche décorative peut également être placée à l'envers sous la couche inférieure de support afin d'être mieux protégée, or cette technique est coûteuse et donc intéressante uniquement pour de grande quantité de jupes de tube à réaliser. Dans tous les cas, une telle couche décorative ne permet que d'insérer un « fond » coloré, et/ou brillant et/ou métallisé sur la jupe de tube.

L'étape suivante consiste à réaliser une impression sur la bande afin que les distributeurs puissent y apposer leur marque et les différentes informations relatives au produit versé à l'intérieur du tube. Cette étape est réalisée avant l'étape de la formation du manchon et l'étape de soudure latérale. Il s'agit donc d'une couche supplémentaire ajoutée par-dessus la couche supérieure scellable. Or cette couche d'impression est fragile, et l'encre a tendance à fluer sous l'effet de la chaleur apportée sur le dessus de la zone de chevauchement pendant la soudure. Il est donc d'usage de ne pas réaliser d'impression sur les deux bordures latérales de la bande qui formeront la zone de recouvrement de la jupe de tube, d'autant plus qu'il existe de nombreuses encres qui ne sont pas soudables. Il en est de même pour le vernis de protection appliqué sur les encres, qui n'est pas soudable.

Plus précisément, il est d'usage de chauffer à la fois la surface externe et la surface interne de la jupe de tube au niveau de la zone de recouvrement, afin de faire fondre de la matière, non seulement en surface de la zone de recouvrement, mais également dans l'épaisseur de la zone de recouvrement, ce qui permet la réalisation d'une soudure robuste et durable dans le temps.

De façon classique, la température de chauffe T1 appliquée sur la surface externe de la jupe de tube est supérieure à la température de chauffe T2 appliquée sur la surface interne de la jupe de tube. L'objectif est de faire fondre la surface externe avant de faire fondre la surface interne, afin que les couches proches de la surface interne, dont notamment une couche barrière réalisant l'étanchéité de la jupe de tube, n'aient pas le temps de se mélanger et donc de créer des points de faiblesse dans la zone de recouvrement.

En effet, pour une structure classique d'une bande multicouche, si T2 était supérieure à T1, les couches internes se mélangeraient en fondant et déstructureraient la bande au niveau de la zone de recouvrement, créant ainsi des points de faiblesse se traduisant par exemple par une mauvaise barrière à l'étanchéité ne garantissant plus la conservation optimale du produit cosmétique qui sera versé à l'intérieur du tube .

L'objectif de la présente divulgation consiste donc à proposer une structure de bande pour jupe de tube qui permette la réalisation d'une soudure latérale esthétique depuis l'extérieur, et suffisamment robuste pour conserver l'effet barrière souhaité. Cette structure de bande doit également permettre l'application d'une large palette d'encres dans la zone de recouvrement de la jupe de tube. Cette divulgation a également pour objectif de proposer un procédé de réalisation d'une telle soudure latérale esthétique et robuste. L'invention a pour objectif de proposer un dispositif permettant de mettre en œuvre ce procédé.

Le document FR 1 418 537 A divulgue un dispositif selon le préambule de la revendication 1.

### Résumé de l'invention

La présente divulgation va à l'encontre des préjugés techniques, en inversant les températures de chauffe de manière à chauffer davantage la surface interne que la surface externe de la jupe de tube dans la zone de recouvrement pour former la soudure latérale.

Dans ce cas, la température de chauffe T1 appliquée sur la surface externe de la jupe de tube est inférieure à la température de chauffe T2 appliquée sur la surface interne de la jupe de tube. Etant donné que la température de chauffe T2 appliquée sur la surface interne de la jupe de tube est plus élevée que dans l'art antérieur, il existe un risque de dégradation des couches, notamment des couches barrière et décorative, ainsi qu'un risque de déformation importante de la jupe de tube au niveau de la zone de soudure latérale.

Afin d'éviter toute détérioration des couches, une structure spécifique a été développée pour la réalisation de la bande formant la jupe de tube.

Ainsi, la présente divulgation concerne une bande plane, adaptée pour former une jupe de tube souple, comprenant un film décoratif superposé à un film primaire, ledit film primaire consistant en une succession de couches en matériau polymère et comprenant une couche interne scellable au niveau de la surface inférieure de la bande, ledit film décoratif comprenant une couche externe scellable au niveau de la surface supérieure de la bande et une couche décorative.

Cette bande se caractérise à titre principal en ce que le film primaire comprend des moyens de stabilisation de la bande et de protection de la couche décorative contre l'échauffement.

Par conséquent, le film sur lequel est appliqué la température de chauffe T2, c'est-à-dire le film primaire, est consolidé afin d'éviter la déformation de la bande formant la jupe de tube et de conserver une couche décorative dans un excellent état même après la réalisation de la soudure latérale.

Lesdits moyens de stabilisation et de protection consistent en au moins deux couches stabilisantes constituées d'éthylène-alcool vinylique (EVOH).

Le comportement mécanique de l'EVOH diffère de celui des autres couches car il est plus rigide. Même dans un état ramolli suite au chauffage pour la réalisation de la soudure latérale, l'EVOH garde sa structure et ne se mélange pas avec les couches adjacentes. Il agit ainsi comme une armature ou un renfort au sein de la bande, et permet de conserver une stabilité dans toute l'épaisseur de la zone de recouvrement.

De plus, l'EVOH est une couche polymérique à effet barrière vis-vis de l'oxygène et des arômes, qui permet de limiter les pertes en arôme ou en parfum du produit conditionné. Il a donc une double fonction au sein de la bande.

De façon avantageuse, la présence de deux couches d'EVOH garantit la stabilité du film.

La répartition de ces couches est également importante. En effet, elles sont disposées symétriquement par rapport au plan médian du film primaire, et à distance l'une de l'autre, de façon à être placées dans les moitiés supérieure et inférieure du film primaire et non au centre de façon adjacentes. Cette disposition permet une répartition optimale des renforts dans l'épaisseur du film primaire.

De préférence, les couches stabilisantes barrière sont situées chacune à une distance relativement faible des surfaces supérieure et inférieure du film primaire, typiquement à 50-120 µm. En diminuant l'épaisseur cumulée des couches comprises entre d'une part la surface supérieure et l'une des couches stabilisante barrière proximale, et d'autre part la surface inférieure et l'autre couche stabilisante barrière proximale, on diminue ainsi fortement, au moins dans un premier temps, les pertes en humidité (et en parfums) du produit contenu dans le tube. Même si la couche stabilisante barrière la plus proche de l'intérieur du tube finit par être dégradée sous l'effet de l'humidité, elle ralentit la diffusion de l'humidité et des parfums jusqu'à l'autre couche barrière qui reste totalement efficace beaucoup plus longtemps.

Le film primaire est un film composé de couches symétriques et obtenu par soufflage.

Le film primaire présente une structure parfaitement symétrique par rapport à son plan médian, c'est-à-dire présentant des couches symétriques ayant substantiellement la même épaisseur et constituées substantiellement du même matériau. Toutes les couches formant le film primaire sont liées de façon continue entre elles.

L'idée est de chercher à limiter les hétérogénéités de comportement des différentes couches en visant une symétrie par rapport au plan médian du film aussi parfaite que possible, pas uniquement géométrique mais également au niveau du matériau constitutif, en ne se contentant pas de l'identité de la composition chimique du ou des monomères de base. Ainsi, les couches symétriques ont substantiellement la même épaisseur, c'est-à-dire des épaisseurs différentes entre elles de moins de 2µm pour les épaisseurs inférieures à 20 µm et de moins de 10% pour les épaisseurs plus grandes.

Les couches symétriques sont constituées substantiellement du même matériau, c'est-à-dire de polymères constitués non seulement de monomères de même composition chimique mais également présentant des macromolécules de longueurs comparables, se traduisant par des masses molaires (moyennes en nombre) n M substantiellement égales, à savoir différant entre elles de moins de 10%, de préférence de moins de 5%.

La symétrie par rapport au plan médian du film permet en particulier de compenser les retraits ou déformations différentielles entre couches se produisant d'un côté du film par les retraits ou déformations différentielles entre couches se produisant de l'autre côté du film.

Il est important que le film présente une symétrie au niveau des couches EVOH, qui sont des couches rigides, afin d'éviter tout risque de formation de contraintes résiduelles non équilibrées.

Afin d'obtenir des couches symétriques, il est d'usage d'utiliser un film soufflé.

Pour obtenir un tel film, le procédé consiste à co-extruder et gonfler une gaine multicouche cylindrique en utilisant une tête-filière annulaire de co-extrusion. La gaine est gonflée de sorte qu'elle forme une bulle à paroi mince qui est ensuite pincée et aplatie, la couche interne de la gaine étant accolée contre elle-même.

La double couche interne ainsi obtenue est réalisée en utilisant un matériau apte à adhérer sur lui-même sous l'effet de la pression d'aplatissement de la bulle, à la température typique du pincement de la bulle, à savoir entre 40°C et 80°C.

Il s'agit par exemple d'une matière thermoplastique telle qu'un polyétylène linéaire, en particulier choisi parmi les copolymères polyéthylènes hexènes, plus particulièrement un copolymère polyéthylène hexène linéaire basse densité (PEL-BD), un polyéthylène à très basse densité (PE-VLD densité comprise entre 0,88 g/cm3 et 0,93 g/cm3), un polyéthylène obtenu avec des catalyseurs monosites métallocènes, un EVA (copolymère éthylène - acétate de vinyle), ou encore des copolymères greffés tels qu'un EAA (copolymère éthylène - acide acrylique ou encore copolymère éthylène - acrylate d'alkyle), en particulier un EAA ionomère, par exemple un Surlyn (marque déposée par la société Dupont de Nemours) ou encore un copolymère (éthylène - ester acrylique) tel qu'un EBA (copolymère éthylène - acrylate de butyle) ou un EMA (copolymère éthylène - acrylate de méthyle ou encore copolymère éthylène - anhydride maléique).

Ladite couche interne scellable et ladite couche externe scellable sont réalisées en polyéthylène à moyenne densité (MDPE).

Le fait d'avoir deux couches scellables dans un matériau identique favorise la soudure entre les deux couches puisqu'elles ont tendance à se mélanger de façon homogène lorsqu'elles sont en contact l'une de l'autre et ramollies par chauffage. En effet, la couche scellable externe vient en contact avec la couche scellable interne dans la zone de recouvrement lors de la mise en forme de la bande en manchon. Ces deux couches doivent donc pouvoir être facilement scellées l'une à l'autre.

De plus, ces couches scellables interne et externe se retrouvent par ailleurs directement en contact avec les moyens de chauffage interne et externe lors de la réalisation de la soudure latérale. Ainsi, le choix du matériau composant ces couches est d'autant plus important qu'il doit être adapté aux températures de chauffe.

De façon avantageuse, le matériau choisi doit donc avoir un point de fusion relativement élevé pour être inférieur à la température de chauffe T1 appliquée sur la surface externe de la jupe de tube afin de ne pas se détériorer lors de la soudure latérale et de conserver un aspect extérieur esthétique et propre. En effet, il est important d'éviter la fusion de la couche externe scellable et le craquement des encres à proximité. En particulier, le MDPE a un point de fusion relativement élevé, entre 122°C et 125°C, ce qui permet d'avoir une température de chauffe T1 appliquée sur la surface externe de la jupe de tube pouvant aller jusqu'à 120°C, sans risque de détérioration de la couche externe scellable.

L'indice de fluidité du MDPE, pour des essais réalisés à 190°C avec un piston chargé ayant une masse standard de 2.16kg, se situe entre 0.9 et 3.5 g/10minutes.

Enfin, la densité du MDPE se situe entre 0.930 et 0.935.

L'utilisation du MDPE au niveau de la couche interne scellable est également avantageuse lors de la dernière étape de fabrication du tube, où une fois qu'il est rempli de produit à conditionner, l'extrémité ouverte du tube est aplatie, ce qui signifie que la couche interne scellable de forme ronde devient aplatie et forme une double couche de MDPE qui peut ensuite être facilement soudée pour fermer le tube rempli.

La couche décorative comprend du polyethylène terephthalate (PET), et peut être dotée d'un revêtement métallisé, ou holographique, ou autre. L'exemple du métal sera pris dans la suite de la description.

Le PET est particulièrement avantageux dans le sens où il confère une stabilité dans le film décoratif. En effet, contrairement à du PE ou du PP, le PET est nettement plus rigide, et présente une densité élevée, permettant de rigidifier le film décoratif, à l'instar des couches d'EVOH dans le film primaire. Cependant, le PET et le métal sont sensibles à la chaleur et fragiles lorsqu'ils sont chauffés. Cela constitue une raison supplémentaire pour limiter la température de chauffe T1, puisque cette couche décorative de PET métallisée est située à proximité de la surface supérieure de la bande, étant donné que l'objectif est de pouvoir visualiser la décoration depuis l'extérieur de la bande. Au niveau de la portion de bande qui est recouverte lors de la formation de la jupe de tube, les deux couches d'EVOH situées sous la couche de PET métallisée permettent de protéger cette dernière contre la température de chauffe T2.

En sus de la couche de PET métallisée, le film décoratif comprend des moyens supplémentaires de décoration, tels qu'une couche supplémentaire imprimée s'étendant sur une partie de la surface extérieure de la couche externe scellable. En effet, la couche de PET métallisée peut réaliser un fond uniforme de décoration, tandis que la couche imprimée permet d'apposer une décoration à base de dessins et d'écritures qui se superpose et s'ajoute au fond uniforme.

Plus précisément, la bande comprend une zone centrale bordée par deux bordures latérales, ladite couche supplémentaire imprimée s'étendant sur la zone centrale ainsi que sur l'une des deux bordures latérales. Ainsi, la couche imprimée ne s'étend pas sur toute la superficie de la bande. Comme expliqué précédemment, la couche imprimée n'est pas scellable, et ne doit donc pas recouvrir la portion de bande qui sera recouverte lors de la réalisation de la soudure latérale de la jupe de tube.

Le film décoratif comprend une couche supplémentaire de protection de la couche imprimée s'étendant sur toute la surface extérieure de la couche imprimée Tout comme la couche imprimée, la couche de protection, du type vernis, n'est pas scellable, et ne doit donc pas recouvrir la portion de bande qui sera recouverte lors de la réalisation de la soudure latérale de la jupe de tube.

Comme annoncé précédemment, cette divulgation concerne également une jupe de tube constituée par roulage d'une bande plane telle que décrite ci-dessus, et comprenant une soudure latérale à recouvrement, une première desdites bordures latérales recouvrant la seconde desdites bordures latérales.

De cette manière :
- la couche imprimée s'étend sur la zone centrale ainsi que sur la première bordure latérale ;
- la couche interne scellable au niveau de la première bordure latérale est scellée à la couche externe scellable au niveau de la seconde bordure latérale et ceci directement, c'est-à-dire sans interposer d'éléments supplémentaires, tel qu'un ruban, une bandelette, une languette. On entend par là une bande de faible largeur s'interposant au niveau de la zone de recouvrement entre la couche interne scellable et la couche externe scellable.

Cette divulgation concerne aussi un tube souple destiné à stocker et à distribuer des produits liquides à pâteux, et comprenant une jupe de tube telle que décrite ci-dessus.

Cette divulgation se rapporte par ailleurs à un procédé de réalisation d'une jupe de tube pour un tube souple, ladite jupe de tube étant fabriquée à partir d'une bande plane comprenant un film décoratif superposé à un film primaire, ledit film primaire comprenant une couche interne scellable au niveau de la surface inférieure de la bande ainsi que deux couches stabilisantes, ledit film décoratif comprenant une couche externe scellable au niveau de la surface supérieure de la bande, et une couche décorative.

Ce procédé comprend les étapes suivantes :
- enrouler la bande plane en forme de manchon pour mettre en forme la jupe de tube ;
- superposer une première bordure latérale de la bande à une seconde bordure latérale de la bande pour former une zone de recouvrement, la couche interne scellable du film primaire de la première bordure latérale venant recouvrir la couche externe scellable du film décoratif de la seconde bordure latérale ;
- appliquer une température de chauffe T2 à l'intérieur de la jupe de tube au niveau de la face interne de la zone de recouvrement pour réaliser la soudure latérale de la jupe de tube ;
- simultanément à l'application de la température de chauffe T2, appliquer une compression entre les faces externe et interne de la zone de recouvrement afin de finaliser la soudure latérale de la jupe de tube.

De façon avantageuse, la température de chauffe T2 est supérieure à la température de fusion de la couche interne scellable du film primaire et de la couche externe scellable du film décoratif, et inférieure à la température de fusion de la couche décorative du film décoratif et des deux couches stabilisantes du film primaire.

D'où le choix de la structure détaillée précédemment, avec :
- la couche interne scellable du film primaire et la couche externe scellable du film décoratif composées de MDPE dont la température de fusion se situe aux alentours de 122 à 125°C
- la couche décorative du film décoratif composée de PET dont la température de fusion est d'environ 250°C
- les deux couches stabilisantes du film primaire composées d'EVOH dont la température de fusion est d'environ 183°C
- les couches intermédiaires du film primaire (hormis les couches d'EVOH) dont la température de fusion est comprise entre 87°C et 123°C.

Ainsi, la température T2 doit au moins atteindre les 125°C afin de faire fondre les couches scellables et les couches intermédiaires qui se mélangeront et formeront le cœur de la soudure latérale. La température T2 ne doit cependant pas atteindre les 183°C afin de ne pas faire fondre les couches stabilisantes et la couche décorative, qui permettent à la jupe de tube de garder une stabilité et une certaine rigidité dans la zone de recouvrement. En résumé, la température T2 sera de préférence comprise entre 125°C et 180°C.

D'autres caractéristiques, optionnelles et non limitatives, sont énoncées ci-après :
- une température de chauffe T1 est appliquée, simultanément à la température de chauffe T2, sur la face externe de la zone de recouvrement : le fait de ramollir légèrement la face externe de la jupe de tube permet d'obtenir une ligne de soudure qui soit plus fondue et moins nette, et donc moins visible à l'œil nu.
- la température de chauffe T1 est inférieure à la température de chauffe T2 : l'objectif est que la chaleur provienne environ à 80% de T2, et seulement à 20% de T1, puisque le chauffage principal permettant la réalisation de la soudure latérale doit venir de l'intérieur de la jupe de tube, et non pas de l'extérieur, afin d'avoir un cordon de soudure localisé à l'intérieur de la jupe de tube, et donc non visible depuis l'extérieur.
- la température de chauffe T1 est inférieure à la température de fusion du matériau qui constitue la couche externe scellable du film primaire : en effet, la couche externe scellable ne doit pas entrer en fusion afin de rester uniforme et de conserver un aspect esthétique depuis l'extérieur du tube
- la couche externe scellable du film primaire se compose de polyéthylène dont la température de fusion est supérieure à 120°C, la température de chauffe T1 étant inférieure à 120°C : cette limitation de température permet d'ajouter des impressions (pour la décoration) sur la couche externe scellable du film décoratif sans que l'encre ne flue et ne craquèle au moment du chauffage.
- la température de chauffe T1 est de préférence inférieure 100°C : cela permet d'utiliser un panel d'encres plus étendu.
- à la place d'appliquer une température de chauffe T1, il est possible de réaliser une étape de préchauffage de la zone de recouvrement avant la superposition des bordures latérales.
- le préchauffage consiste en un soufflage d'air chaud dans l'interstice séparant la première bordure latérale de la seconde bordure latérale avant leur superposition.
- il est aussi possible de ne pas appliquer de température de chauffe T1, ni de préchauffage, et de ne chauffer la zone de recouvrement que par l'intérieur de la jupe de tube avec T2 ;
- une étape de refroidissement de la zone de recouvrement est réalisée après ladite étape de compression.
- ladite étape de refroidissement consiste en un refroidissement de la face interne de la zone de recouvrement.
- la zone de recouvrement a une largeur comprise de préférence entre 1.5 et 2.5mm.

Afin de mettre en place le procédé de réalisation de la jupe de tube, et en particulier de la soudure latérale, il a été mis en place un dispositif de fabrication spécifique. En effet, puisque la température de chauffe interne T2 constitue désormais le chauffage principal pour la réalisation de la soudure latérale, il est nécessaire de refroidir ensuite la face interne de la zone de recouvrement et non la face externe de la zone de recouvrement comme il était d'usage de faire. Des adaptations ont ainsi dû être apportées aux dispositifs classiques.

De façon classique, puisque T1 est supérieur à T2, le refroidissement est réalisé principalement sur la face externe de la zone de recouvrement de la jupe de tube au moyen d'une bande mobile de refroidissement qui assure par ailleurs la compression de la zone de recouvrement, et l'entraînement de la jupe de tube au sein du dispositif. Cette bande mobile peut assurer uniquement le refroidissement extérieur, ou peut également assurer le chauffage extérieur en amont du refroidissement extérieur. Il s'agit d'une bande mobile fermée sur elle-même, entraînée via des poulies, et se développant en parallèle d'un mandrin autour duquel s'enroule la bande souple formant la jupe de tube. L'inconvénient principal avec l'utilisation de bandes pour le chauffage et le refroidissement est qu'il est difficile de maîtriser la température de la bande, de par sa mobilité, son épaisseur, et le matériau qui la constitue. De plus, il s'agit d'un système complexe de mise en œuvre avec les poulies.

Il existe également des dispositifs où un système de refroidissement est disposé au sein du mandrin, du côté intérieur de la jupe de tube, comme divulgué dans le document FR1571778. Il s'agit cependant d'un système servant à faire refroidir le mandrin en lui-même, et la zone de recouvrement de façon indirecte. Ce système de refroidissement n'est donc pas très performant.

Le dispositif de fabrication de l'invention comprend un bâti, un mandrin allongé cylindrique, un moyen servant à faire avancer et guider la bande souple pour la mettre sous la forme d'un manchon autour du mandrin, l'une des bordures latérales de cette bande venant recouvrir l'autre bordure latérale pour former une zone de recouvrement à souder, un moyen de chauffage intérieur localisé dans le mandrin pour chauffer la face interne de la zone de recouvrement, un moyen de refroidissement intérieur localisé dans le mandrin pour refroidir la face interne de la zone de recouvrement et en aval du moyen de chauffage intérieur.

Ce dispositif se caractérise à titre principal en ce que ledit moyen de refroidissement est disposé en vis-à-vis de la zone de recouvrement et configuré pour être en contact direct avec la zone de recouvrement, autrement dit aucune bande mobile n'est interposée entre le mandrin et la bande souple.

Ainsi, le moyen de refroidissement agit directement sur la zone de recouvrement de la jupe de tube, et n'a pas pour fonction de refroidir le mandrin. Ce dernier sert uniquement de support au moyen de refroidissement.

D'autres caractéristiques, optionnelles et non limitatives, sont énoncées ci-après :
- ledit moyen de refroidissement est fixe dans le dispositif.
- le moyen de refroidissement consiste en une barrette de refroidissement insérée dans une rainure correspondante pratiquée dans le mandrin.
- ladite barrette de refroidissement comporte un canal à l'intérieur duquel circule un fluide de refroidissement.
- la barrette de refroidissement comporte une paroi plane fermant le canal en partie supérieure et étant en contact direct avec la face interne de la zone de recouvrement.
- ledit canal définit un chemin intérieur crénelé.
- ledit canal comporte un agencement en quinconce d'ailettes de guidage du fluide de refroidissement, définissant ledit chemin intérieur crénelé.
- lesdites ailettes s'étendent orthogonalement depuis la paroi plane en direction de l'axe central du mandrin.
- lesdites ailettes forment deux rangées en quinconce orientées selon une direction longitudinale parallèle à l'axe central du mandrin.
- lesdites ailettes correspondent à des languettes d'allure rectangulaires.
- ladite rainure définit un espace creux parallélépipédique.
- la barrette de refroidissement a une forme extérieure générale parallélépipédique épousant la forme des parois de ladite rainure.

### Présentation des figures

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 est une vue de dessus d'une bande selon cette divulgation ;
- la figure 2 est une vue en coupe transversale de la bande de la figure 1 ;
- la figure 3 est une vue en coupe transversale d'une jupe de tube formée à partir de la bande de la figure 1 ;
- la figure 4 liste les différentes couches au niveau de la zone de recouvrement de la jupe de tube de la figure 3 ;
- la figure 5 représente la zone de recouvrement de la jupe de tube de la figure 3 avant la réalisation de la soudure latérale, selon un premier mode de réalisation ;
- la figure 6 représente la zone de recouvrement de la jupe de tube de la figure 3 avant la réalisation de la soudure latérale, selon un second mode de réalisation ;
- la figure 7 représente la zone de recouvrement de la jupe de tube de la figure 3 après la réalisation de la soudure latérale, pour les premier et second modes de réalisation;
- la figure 8 est une vue en perspective d'une partie de l'outillage nécessaire pour la réalisation de la soudure latérale de la jupe de tube de la figure 3 ;
- la figure 9 est une vue éclatée du dispositif de refroidissement appartenant à l'outillage de la figure 8 ;
- la figure 10 représente en détail la barrette de refroidissement du dispositif de refroidissement de la figure 9 ;
- la figure 11 montre en détail le dispositif de chauffage appartenant à l'outillage de la figure 8.

### Description détaillée

Les termes « externe » et « extérieur » sont utilisés pour indiquer qu'une couche est orientée vers l'extérieur de la jupe de tube ainsi formée. De la même manière, les termes « interne » et « intérieur » sont utilisés pour indiquer qu'une couche est orientée vers l'intérieur de la jupe de tube ainsi formée.

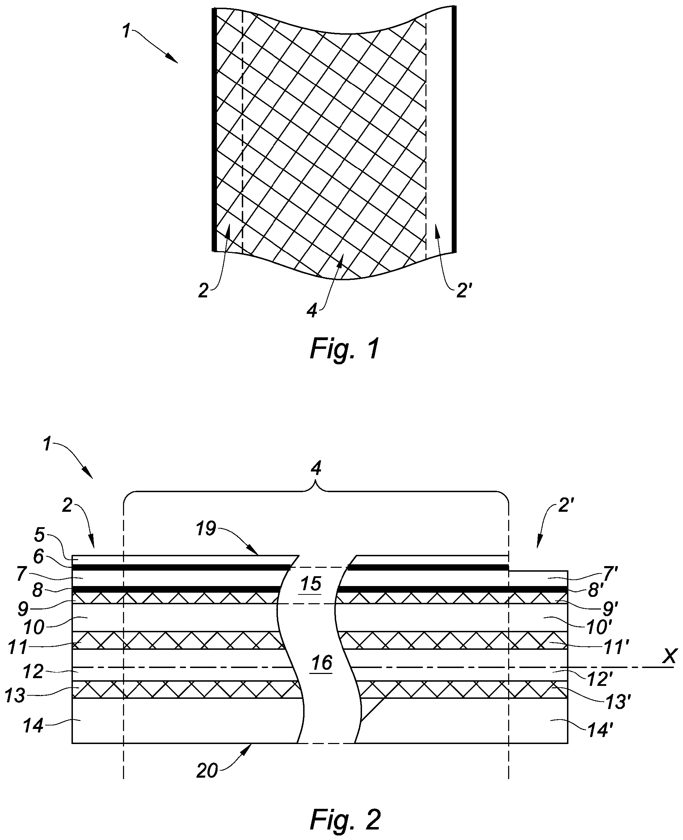

En référence aux figures 1 et 2, est représenté un tronçon d'une bande 1 plane selon cette divulgation, qui sera ensuite enroulée pour former une jupe de tube.

Cette bande 1 comporte une zone centrale 4 bordée par une première 2 et une seconde 2' bordures latérales.

Il est connu d'obtenir une telle bande 1 en utilisant des films multicouches obtenus par extrusion ou par laminage-collage.

La bande 1 plane selon cette divulgation comporte une succession de couches.

Concrètement, elle est composée d'un film décoratif 15 surmontant un film primaire 16.

Dans chaque mode de réalisation, le film décoratif 15 comprend une couche externe scellable 7 se situant au niveau de la surface supérieure 19 de la bande 1, et une couche décorative 8,9 constituée d'une base en PET 9 située sous la couche externe scellable 7.

La couche décorative 8,9 est appliquée sur toute la surface du film décoratif 15 et se situe sous la couche externe scellable 7. En d'autres termes, il n'y a pas de zones appartenant au film décoratif 15 qui ne soit recouverte par à la fois la couche décorative 8,9 et la couche externe scellable 7.

Cette couche décorative 8,9 peut contenir une pellicule métallisée ou holographique 8, ou autre, selon le type de décoration choisi. Elle constitue le fond de la décoration du tube qui sera par la suite formé.

De préférence, cette pellicule 8 est appliquée sur le dessus de la base en PET 9, afin qu'elle soit orientée en direction de la surface supérieure 19 de la bande 1. Dans une autre configuration possible, cette pellicule 8 pourrait être appliquée sur le dessous de la base en PET 9. La base en PET consiste en une couche à haute densité, qui a un rôle de renfort lors de la formation de la jupe de tube. Cette couche 9 est hachurée sur la figure 2.

La couche décorative 8,9 du film décoratif 15 a une épaisseur comprise entre 5 et 50 µm, de préférence entre 10 et 30 µm.

Dans tous les cas, la couche externe scellable 7 est située au-dessus de la couche décorative 8,9 et protège donc cette dernière contre les impacts/rayures liés à la manipulation future de la jupe de tube ainsi formée. La couche externe scellable 7 est de préférence transparente de manière à ce que la décoration puisse être bien visible depuis l'extérieur du tube qui sera formé.

Cette couche externe scellable 7 est constituée de PE, et peut être multicouche également. De préférence, la couche externe scellable 7 est constituée de trois couches en PE. De préférence, la matière choisie pour les trois couches sera du MDPE pour ses caractéristiques techniques.

De manière générale, la couche externe scellable 7 du film décoratif 15 a une épaisseur comprise entre 5 et 90 µm, de préférence entre 5 et 80 µm.

Optionnellement, en sus de la couche décorative 8,9, le film décoratif 15 peut être imprimé directement sur la couche externe scellable 7, afin d'ajouter de la décoration. Ainsi, une couche supplémentaire imprimée 6, ainsi qu'une couche de protection 5 (type vernis) peuvent s'étendre sur une partie de la surface externe du film décoratif 8,9. Plus précisément, ces deux couches imprimée 6 et de protection 5 s'étendent sur la zone centrale 4 et la première bordure latérale 2 de la bande 1. En d'autres termes, les deux couches imprimée 6 et de protection 5 s'étendent sur toute la superficie de la bande 1, hormis la seconde bordure latérale 2' (voir zone hachurée sur la figure 1). Il s'agit de la bordure latérale 2' qui sera recouverte par la première bordure latérale 2 lors de la formation de la jupe de tube. Puisque l'encre et le vernis ne sont pas scellables, il est impératif de ne pas en mettre sur la seconde bordure 2' qui sera chevauchée pour la réalisation de la soudure latérale.

Le film primaire 16 est un film multicouche qui comprend une couche interne scellable 14 se situant au niveau de la surface inférieure 20 de la bande 1, ainsi que deux couches stabilisantes 11,13 réparties symétriquement dans le film primaire 16 par rapport à son plan médian X et hachurées sur la figure 2 pour montrer leur rôle de renfort.

Le film primaire 16 peut comprendre jusqu'à 22 couches.

Au moins une couche consiste en une couche barrière permettant d'assurer l'étanchéité à l'humidité et la conservation des arômes par rapport au produit qui sera versé à l'intérieur du tube ainsi formé par la bande 1 enroulée.

Les autres couches peuvent être choisies parmi des polyéthylènes, comme par exemple un polyéthylène à basse densité (LDPE), un polyéthylène à basse densité linéaire (LLDPE), un polyéthylène à densité moyenne (MDPE), un polyéthylène à haute densité (HDPE), ou un mélange de ces polyéthylène, ou de l'éthylène-acétate de vinyl (EVA). Entre ces différentes couches, une couche de liaison et/ou un revêtement adhésif peut être appliqué afin d'améliorer l'adhérence entre les couches.

Le film primaire 16 a une épaisseur comprise entre 100 et 500 µm, de préférence entre 200 et 350 µm.

Le film primaire 16 peut être un film soufflé, afin de présenter une symétrie entre ses différentes couches.

Dans ce cas, la double couche centrale 12 sera composée de préférence par de l'EVA qui présente de bonnes aptitudes à se coller sur elle-même lors de l'aplatissement de la gaine soufflée. Les deux couches stabilisantes 11,13 sont réparties symétriquement de part et d'autre du plan médian X du film 16 réalisé par la double couche d'EVA 12. Ces couches stabilisantes 11,13 sont constituées d'EVOH. Il se trouve que l'EVOH est également un matériau capable de remplir la fonction de barrière pour l'étanchéité. Par conséquent, les deux couches d'EVOH 11,13 remplissent la double fonction de renfort et d'étanchéité au sein du film primaire 16. Enfin, la couche interne scellable 14 présente également son double, situé symétriquement dans le film primaire 16, correspondant à une couche externe scellable 10 du film primaire 16, et qui est donc en contact avec la couche inférieure du film décoratif 15. Les deux couches scellables 10,14 du film primaire 16 sont constituées de MDPE, afin de correspondre à la couche externe scellable 7 du film décoratif 15.

Voici des exemples de structure détaillée formant la bande 1 selon cette divulgation.

### Exemple 1 :

| Couche | Matériau | Densité (g/cm3) | épaisseur (µm) | Correspondance avec les figures 1 et 2 | |
|---|---|---|---|---|---|
| 1 | MDPE | 0.934 | 15 | Couche externe scellable 7 | Film décoratif 15 |
| 2 | MDPE | 0.934 | 22 | | |
| 3 | MDPE | 0.934 | 13 | | |
| 4 | Revêtement adhésif | | 4 | Couche adhésive | |
| 5 | PET + pellicule métallique (vers le bas) | 1.417 | 12 | Couche décorative 8,9 | |
| 6 | Revêtement adhésif | | 4 | Couche adhésive | |
| 7 | MDPE | 0.934 | 109 | Couche externe scellable 10 | Film primaire 16 |
| 8 | Résine | 0.91 | 7 | Couche adhésive | |
| 9 | EVOH | 1.17 | 10 | Couche stabilisante 11 | |
| 10 | Résine | 0.92 | 7 | Couche adhésive | |
| 11 | EVA | 0.941 | 17x2 | Couche centrale 12 | |
| 12 | Résine | 0.92 | 7 | Couche adhésive | |
| 13 | EVOH | 1.17 | 10 | Couche stabilisante 13 | |
| 14 | Résine | 0.91 | 7 | Couche adhésive | |
| 15 | MDPE | 0.934 | 109 | Couche interne scellable 14 | |

### Exemple 2

| Couche | Matériau | Epaisseur (µm) | Correspondance avec les figures 1 et 2 | |
|---|---|---|---|---|
| 1 | MDPE | 15 | Couche externe scellable 7 | Film décoratif 15 |
| 2 | MDPE | 22 | | |
| 3 | MDPE | 13 | | |
| 4 | Revêtement adhésif | | Couche adhésive | |
| 5 | pellicule métallique (vers le haut) + PET | 12 | Couche décorative 8,9 | |
| 6 | Revêtement adhésif | | Couche adhésive | |
| 7 | MDPE | 72 | Couche externe scellable 10 | Film primaire 16 |
| 8 | Résine | 7 | Couche adhésive | |
| 9 | EVOH | 7 | Couche stabilisante 11 | |
| 10 | Résine | 7 | Couche adhésive | |
| 11 | MDPE | 40 | | |
| 12 | EVA | 17.3 x 2 | Couche centrale 12 | |
| 13 | MDPE | 40 | | |
| 14 | Résine | 7 | Couche adhésive | |
| 15 | EVOH | 7 | Couche stabilisante 13 | |
| 16 | Résine | 7 | Couche adhésive | |
| 17 | MDPE | 72 | Couche interne scellable 14 | |

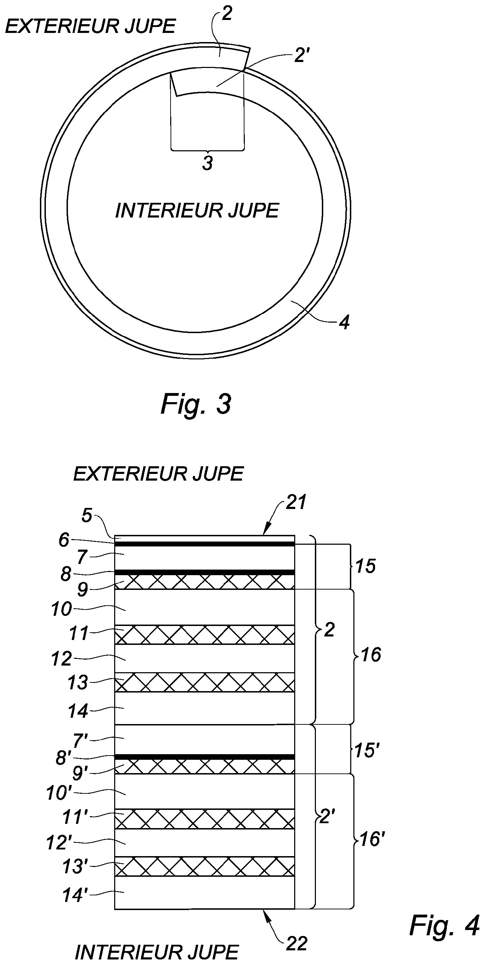

Lors de la formation de la jupe de tube, en enroulant la bande 1, la première bordure latérale 2 vient recouvrir la seconde bordure latérale 2', comme illustré en figure 3.

La figure 4 montre la succession des couches dans la zone de recouvrement 3.

Pour plus de clarté, les couches situées au niveau de la seconde bordure latérale 2' ont une numérotation correspondant aux couches situées au niveau de la première bordure latérale 2 puisqu'il s'agit des mêmes couches, mais sont numérotées avec un « prime ' » supplémentaire afin de les différencier.

On retrouve dans l'ordre, depuis l'extérieur de la jupe de tube vers l'intérieur de la jupe de tube :
- 5 : la couche de protection de la première bordure latérale
- 6 : la couche imprimée de la première bordure latérale
- 7 : la couche externe scellable du film décoratif de la première bordure latérale
- 8 : le revêtement métallisé du film décoratif de la première bordure latérale
- 9 : la couche de PET supportant le revêtement métallisé du film décoratif de la première bordure latérale
- 10 : la couche externe scellable du film primaire de la première bordure latérale
- 11 : la couche stabilisante d'EVOH du film primaire de la première bordure latérale
- 12 : la couche centrale du film primaire de la première bordure latérale
- 13 : la couche stabilisante d'EVOH du film primaire de la première bordure latérale
- 14 : la couche interne scellable du film primaire de la première bordure latérale
- 7' : la couche externe scellable du film décoratif de la seconde bordure latérale
- 8' : le revêtement métallisé du film décoratif de la seconde bordure latérale
- 9' : la couche de PET supportant le revêtement métallisé du film décoratif de la seconde bordure latérale
- 10' : la couche externe scellable du film primaire de la seconde bordure latérale
- 11': la couche stabilisante d'EVOH du film primaire de la seconde bordure latérale
- 12' : la couche centrale du film primaire de la seconde bordure latérale
- 13' : la couche stabilisante d'EVOH du film primaire de la seconde bordure latérale
- 14' : la couche interne scellable du film primaire de la seconde bordure latérale

Les couches intermédiaires adhésives ne sont pas représentées pour plus de clarté.

Il est à noter que la couche interne scellable 14 du film primaire 16 de la première bordure latérale 2 est bien située directement sur la couche externe scellable 7' du film décoratif 15' de la seconde bordure latérale 2'. Ces deux couches scellables 14,7' en MDPE vont fondre et fusionner lors de la soudure latérale, permettant ainsi aux deux bordures latérales 2,2' de se souder l'une à l'autre.

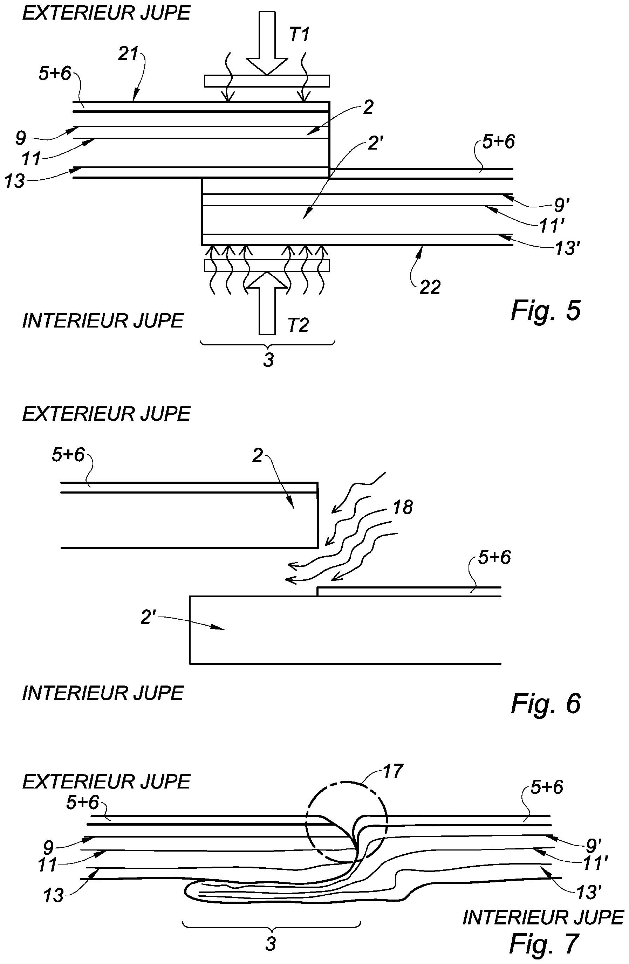

La figure 5 montre précisément le recouvrement réalisé pour la formation de la jupe de tube, avant la réalisation de la soudure latérale, et selon un premier mode de réalisation. Dans ce cas, une température de chauffe T2 comprise entre 125°C et 180°C est appliquée sur la surface interne 22 de la jupe de tube, plus précisément sur la couche interne scellable 14' du film primaire 16' de la seconde bordure latérale 2' en MDPE.

Simultanément, une température de chauffe T1, bien inférieure à la température de chauffe T2, et inférieure à 120°C est appliquée sur la surface externe 21 de la jupe de tube, plus précisément sur la couche externe scellable 7 du film décoratif 15 de la première bordure latérale 2 en MDPE.

Simultanément à la chauffe, la zone de recouvrement 3 est compressée au niveau de ses deux faces externe 21 et interne 22 afin d'aider les couches en fusion à bien se mélanger et à adhérer les unes aux autres afin de réaliser la soudure latérale de la jupe de tube.

Concrètement, les couches suivantes vont entrer en fusion grâce à la température de chauffe T2 :
- 14 : la couche interne scellable du film primaire de la première bordure latérale
- 7' : la couche externe scellable du film décoratif de la seconde bordure latérale
- 10' : la couche externe scellable du film primaire de la seconde bordure latérale
- 12' : la couche centrale du film primaire de la seconde bordure latérale
- 14' : la couche interne scellable du film primaire de la seconde bordure latérale

Les couches intermédiaires de liaison seront également en fusion.

Les couches stabilisantes 11,11',13,13', et les couches décoratives en PET métallisé 8,9,8',9' ne rentreront pas en fusion et ne se mélangeront pas aux autres couches, permettant ainsi de conserver un ordre dans les couches au moment de la soudure et après la soudure, et de conserver une stabilité dans la structure chauffée.

Les deux couches stabilisantes d'EVOH 11,13 du film primaire 16 de la première bordure latérale 2 permettent également de protéger la couche décorative en PET métallisé 8,9 contre l'échauffement en provenance de la température de chauffe T2, puisque la couche de PET métallisée est sensible au chauffage et devient fragile.

Ceci est particulièrement visible en figure 7 où sont montrées les déformations des différentes couches après la réalisation de la soudure latérale. Il est bien visibles que les couches stabilisantes 11,11',13,13' et les couches décoratives en PET métallisé 8,9,8',9' ne sont pas mélangées aux autres couches et ont simplement été déformées sous l'action de la compression. Les couches en amont, en aval, et entre les couches stabilisantes, ont quant à elles été mélangées et ont fusionné. Le cordon de soudure est bien localisé à l'intérieur de la jupe de tube.

Il est à noter que la couche de PET métallisé 8',9' de la seconde bordure latérale 2' a elle aussi été protégée contre l'échauffement par les deux couches stabilisantes d'EVOH 11',13' de la seconde bordure latérale 2', notamment dans la nouvelle zone de jonction 17 entre les deux bordures latérales 2,2' en superficie de la jupe de tube.

Cette zone de jonction 17 est très étroite, les deux bordures 2,2' étant très proches, et la discontinuité de la couche imprimée 6 sur la jupe de tube est ainsi minime. La jupe de tube ainsi formée est esthétique, et présente une soudure robuste.

Dans un second mode de réalisation, au lieu d'appliquer une température de chauffe T1 sur la surface externe 21 de la jupe de tube, il est possible de préchauffer la zone de recouvrement 3 par un soufflage d'air chaud 18 dans l'interstice séparant la première bordure latérale 2 de la seconde bordure latérale 2' avant leur superposition, comme illustré en figure 6.

L'objectif étant de ramollir préalablement les couches sensées entrer en fusion lors de la soudure latérale, notamment les couches orientées vers l'extérieur de la jupe de tube, afin d'obtenir une soudure ayant un aspect uniforme depuis l'extérieur de la jupe de tube.

Le résultat final est analogue à celui du premier mode de réalisation, et correspond à celui présenté en figure 7.

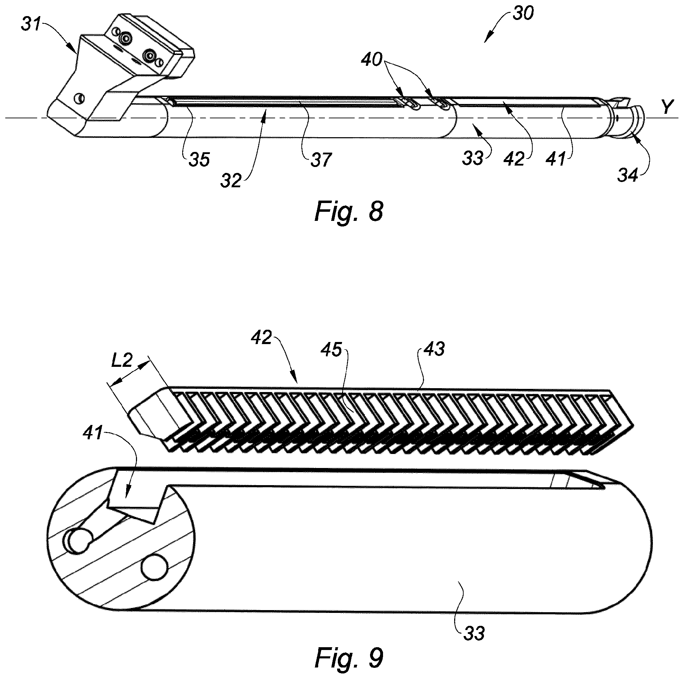

La figure 8 montre un outillage adapté pour la mise en œuvre du procédé de fabrication tel que décrit précédemment.

Cet outillage concerne principalement un mandrin 30 cylindrique s'étendant longitudinalement selon un axe Y, et apte à être fixé sur un bâti (non représenté). Ce mandrin 30 se compose d'un premier tronçon d'extrémité 31, d'un tronçon de chauffage intérieur 32, d'un tronçon de refroidissement intérieur 33, et d'un second tronçon d'extrémité 34.

La bande souple (non représentée) est guidée de manière à venir s'enrouler autour du mandrin 30, et de manière à ce qu'une première bordure latérale de la bande vienne recouvrir une seconde bordure latérale de la bande, formant ainsi une zone de recouvrement se situant en partie supérieure du mandrin 30. La partie du dispositif permettant l'enroulement de la bande ne sera pas décrite puisqu'elle est connue et largement utilisée depuis des années.

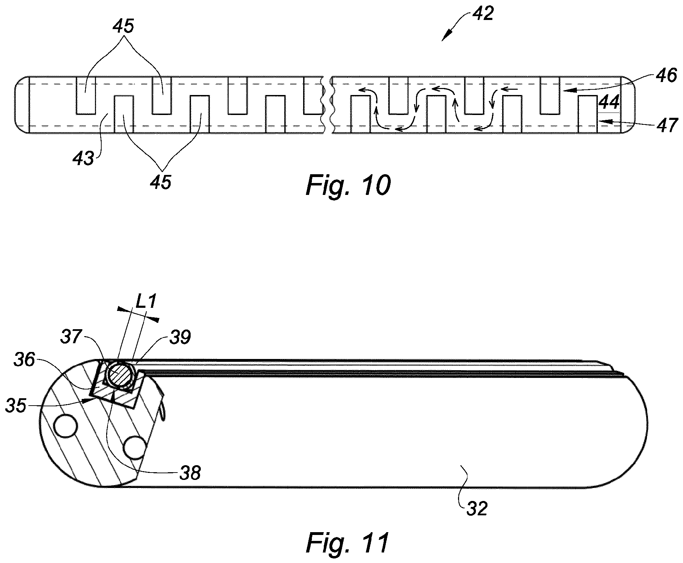

La zone de recouvrement de la jupe de tube ainsi formée arrive tout d'abord au niveau du tronçon de chauffage intérieur 32 du mandrin 30, illustré plus précisément en figure 11. Ce tronçon 32 comprend une rainure 35 pratiquée en partie supérieure du mandrin 30, dans laquelle vient se loger une pièce isolante 36 apte à accueillir une pièce chauffante 37 qui sera en contact avec la face interne de la zone de recouvrement pour la réalisation de la soudure latérale.

La rainure 35 a une forme parallélépipédique. La pièce isolante 36 a une forme en U avec ses parois extérieures angulaires épousant la forme de la rainure 35 du mandrin 30.

La pièce chauffante 37 consiste en un cylindre dont les parties inférieure 38 et supérieure 39 comprennent un méplat lui permettant respectivement d'être positionnée correctement au fond de la pièce isolante 36 avec un contact plan, et de présenter une surface plane supérieure 39 dont la largeur L1 correspond au moins à celle de la zone de recouvrement. Cette pièce chauffante 37 ainsi positionnée peut chauffer la face interne de la zone de recouvrement à la température de chauffe T2, afin de réaliser la soudure latérale. En parallèle, une bande mobile métallique (non représentée) vient appuyer sur la face externe de la zone de recouvrement afin d'exercer une compression de la zone de recouvrement et d'aider les différentes couches qui fondent à se mélanger et à faire en sorte qu'il n'y ait plus de décrochement au niveau de la zone de recouvrement, c'est-à-dire que la surface externe de la jupe de tube soit linéaire sur toute sa circonférence. Cette compression permet également de réduire au final l'épaisseur de la soudure latérale.

Optionnellement, un moyen de chauffage extérieur (non représenté) localisé en face du mandrin 30 peut être prévu sur le dispositif pour chauffer la face externe de la zone de recouvrement à la température de chauffe T1. Ce moyen de chauffage peut être associé à la bande mobile.

Lorsque la soudure latérale est réalisée, la jupe de tube, entraînée notamment via la bande mobile métallique, arrive au niveau de la partie centrale du mandrin 30 où sont disposées des roulettes 40 ayant une fonction classique de compression et de formage de la jupe de tube au niveau de la zone de recouvrement.

Puis la jupe de tube arrive au niveau du tronçon de refroidissement 33 du mandrin 30, représenté plus en détail en figure 9. Ce tronçon 33 comporte également une rainure 41 pratiquée au niveau de la surface supérieure du mandrin 30. Cette rainure 41 forme un espace creux d'allure parallélépipédique.

Au sein de cette rainure 41 est logée une barrette de refroidissement 42, également d'allure parallélépipédique. Les dimensions de la barrette 42 et de la rainure 41 coïncident afin d'assurer un positionnement optimal de l'un dans l'autre. La barrette 42 est donc fixe au sein du mandrin 30.

Cette barrette 42 comprend une paroi supérieure 43 plane qui est disposée et apte à venir directement au contact de la face interne de la zone de recouvrement. Cette dernière sera donc refroidie via ce contact plan avec la paroi plane 43 de la barrette 42. La température de refroidissement est donc régulée à partir de la température mesurée sur la surface de la paroi plane 43. Cette paroi supérieure 43 présente une largeur L2 au moins aussi grande que celle de la zone de recouvrement afin de bien refroidir toute la soudure latérale.

Sous cette paroi plane 43, se trouve un canal 44 à l'intérieur duquel circule un fluide de refroidissement. Dans le présent exemple, ce canal 44 a une forme crénelée, comme illustré en figure 10. En effet, une pluralité d'ailettes 45 s'étendent perpendiculairement de la paroi plane 43 de la barrette 42 en direction l'axe central Y du mandrin 30. Ces ailettes 45 forment deux rangées 46,47 longitudinales se développant le long d'un axe parallèle à l'axe Y du mandrin 30, et sont disposées en quinconce de manière à former le crénelage. Le fluide de refroidissement circule ainsi entre les ailettes 45, en empruntant le chemin crénelé 44, comme illustré par les flèches. Ce chemin 44 oblige le fluide à sillonner, et passer ainsi plus de temps au sein de la barrette 42 afin de favoriser les échanges thermiques.

Les ailettes 45 permettent d'augmenter la surface d'échange thermique entre d'une part la zone de recouvrement encore chaude suite à la soudure, et d'autre part le liquide de refroidissement froid. En augmentant de la sorte la surface d'échange, on augmente également les performances de refroidissement. Ainsi, la longueur du tronçon de refroidissement 33 du mandrin 30 selon l'invention peut être largement réduite tout en obtenant des résultats de refroidissement optimums par rapport à un dispositif de refroidissement sans ailette 45, et/ou ayant un canal 44 de refroidissement rectiligne. Le mandrin 30 selon l'invention présente donc l'avantage d'être compact.

De préférence, les ailettes 45 consistent en des languettes rectangulaires. Cependant, elles pourraient présenter d'autres formes avantageuses.

Il en est de même pour le canal 44 de refroidissement qui peut prendre d'autres formes avantageuses.

Pendant l'étape de refroidissement, la zone de recouvrement continue de préférence d'être comprimée via la bande mobile.

## Revendications

1. Dispositif de fabrication d'une jupe de tube à partir d'une bande souple, comprenant un bâti, un mandrin 30 allongé cylindrique, un moyen servant à faire avancer et guider cette bande pour la mettre sous la forme d'un manchon autour du mandrin 30, l'une des bordures latérales de cette bande venant recouvrir l'autre bordure latérale pour former une zone de recouvrement à souder, un moyen de chauffage intérieur 32 localisé dans le mandrin 30 pour chauffer la face interne de la zone de recouvrement, un moyen de refroidissement intérieur 33 localisé dans le mandrin 30 pour refroidir la face interne de la zone de recouvrement et en aval du moyen de chauffage intérieur 32,
**caractérisé en ce que** ledit moyen de refroidissement 33 est disposé en vis-à-vis de la zone de recouvrement et configuré pour être en contact direct avec la zone de recouvrement.

2. Dispositif de fabrication d'une jupe de tube selon la revendication précédente, **caractérisé en ce que** ledit moyen de refroidissement 33 est fixe dans le dispositif.

3. Dispositif de fabrication d'une jupe de tube selon l'une des revendications précédentes, **caractérisé en ce que** ledit moyen de refroidissement 33 consiste en une barrette de refroidissement 42 insérée dans une rainure 41 correspondante pratiquée dans le mandrin 30.

4. Dispositif de fabrication d'une jupe de tube selon la revendication précédente, **caractérisé en ce que** ladite barrette de refroidissement 42 comporte un canal 44 à l'intérieur duquel circule un fluide de refroidissement.

5. Dispositif de fabrication d'une jupe de tube selon la revendication précédente, **caractérisé en ce que** la barrette de refroidissement 42 comporte une paroi 43 plane fermant le canal 44 en partie supérieure et étant en contact direct avec la face interne de la zone de recouvrement.

6. Dispositif de fabrication d'une jupe de tube selon la revendication précédente, **caractérisé en ce que** ledit canal 44 définit un chemin intérieur crénelé.

7. Dispositif de fabrication d'une jupe de tube selon la revendication précédente, **caractérisé en ce que** ledit canal 44 comporte un agencement en quinconce d'ailettes 45 de guidage du fluide de refroidissement, définissant ledit chemin intérieur crénelé.

8. Dispositif de fabrication d'une jupe de tube selon la revendication précédente, **caractérisé en ce que** lesdites ailettes 45 s'étendent orthogonalement depuis la paroi 43 plane en direction de l'axe central Y du mandrin 30.

9. Dispositif de fabrication d'une jupe de tube selon la revendication précédente, **caractérisé en ce que** lesdites ailettes 45 forment deux rangées 46,47 en quinconce orientées selon une direction longitudinale parallèle à l'axe central Y du mandrin 30.

10. Dispositif de fabrication d'une jupe de tube selon l'une des revendications 7 à 9, **caractérisé en ce que** lesdites ailettes 45 correspondent à des languettes d'allure rectangulaires.

11. Dispositif de fabrication d'une jupe de tube selon l'une des revendications 3 à 10, **caractérisé en ce que** ladite rainure 41 définit un espace creux parallélépipédique.

12. Dispositif de fabrication d'une jupe de tube selon la revendication précédente, **caractérisé en ce que** la barrette de refroidissement 42 a une forme extérieure générale parallélépipédique épousant la forme des parois de ladite rainure 41.

## Patentansprüche

1. Vorrichtung zur Herstellung eines Tubenkörpers aus einer flexiblen Bahn, umfassend einen Rahmen, einen länglichen zylindrischen Dorn 30, ein Mittel zum Vorschieben und Führen dieser Bahn, um sie um den Dorn 30 herum in die Form einer Hülse zu bringen, wobei einer der Seitenränder dieser Bahn den anderen Seitenrand überlappt, um einen zu verschweißenden Überlappungsbereich zu bilden, ein inneres Heizmittel 32, das sich im Dorn 30 befindet, um die Innenfläche des Überlappungsbereichs zu erwärmen, ein inneres Kühlmittel 33, das sich im Dorn 30 befindet, um die Innenfläche des Überlappungsbereichs und stromabwärts des inneren Heizmittels 32 zu kühlen,
**dadurch gekennzeichnet, dass** das Kühlmittel 33 gegenüber dem Überlappungsbereich angeordnet und so konfiguriert ist, dass es in direktem Kontakt mit dem Überlappungsbereich steht.

2. Vorrichtung zur Herstellung eines Tubenkörpers nach dem vorstehenden Anspruch, **dadurch gekennzeichnet, dass** das Kühlmittel 33 fest in der Vorrichtung angebracht ist.

3. Vorrichtung zur Herstellung eines Tubenkörpers nach einem der vorstehenden Ansprüche, **dadurch gekennzeichnet, dass** das Kühlmittel 33 aus einem Kühlstab 42 besteht, der in eine entsprechende Nut 41 eingefügt ist, die in den Dorn 30 eingearbeitet ist.

4. Vorrichtung zur Herstellung eines Tubenkörpers nach dem vorstehenden Anspruch, **dadurch gekennzeichnet, dass** der Kühlstab 42 einen Kanal 44 aufweist, in dessen Innerem ein Kühlfluid fließt.

5. Vorrichtung zur Herstellung eines Tubenkörpers nach dem vorstehenden Anspruch, **dadurch gekennzeichnet, dass** der Kühlstab 42 eine ebene Wand 43 umfasst, die den Kanal 44 oben schließt und in direktem Kontakt mit der Innenfläche des Überlappungsbereichs steht.

6. Vorrichtung zur Herstellung eines Tubenkörpers nach dem vorstehenden Anspruch, **dadurch gekennzeichnet, dass** der Kanal 44 einen zinnenförmigen Innenpfad definiert.

7. Vorrichtung zur Herstellung eines Tubenkörpers nach dem vorstehenden Anspruch, **dadurch gekennzeichnet, dass** der Kanal 44 eine versetzte Anordnung von Kühlfluid-Leitrippen 45 umfasst, die den zinnenförmigen Innenpfad definieren.

8. Vorrichtung zur Herstellung eines Tubenkörpers nach dem vorstehenden Anspruch, **dadurch gekennzeichnet, dass** sich die Rippen 45 rechtwinklig von der ebenen Wand 43 in Richtung der Mittelachse Y des Dorns 30 erstrecken.

9. Vorrichtung zur Herstellung eines Tubenkörpers nach dem vorstehenden Anspruch, **dadurch gekennzeichnet, dass** die Rippen 45 zwei versetzte Reihen 46,47 bilden, die in einer Längsrichtung parallel zur Mittelachse Y des Dorns 30 ausgerichtet sind.

10. Vorrichtung zur Herstellung eines Tubenkörpers nach einem der Ansprüche 7 bis 9, **dadurch gekennzeichnet, dass** die Rippen 45 rechteckförmigen Zungen entsprechen.

11. Vorrichtung zur Herstellung eines Tubenkörpers nach einem der Ansprüche 3 bis 10, **dadurch gekennzeichnet, dass** die Nut 41 einen parallelepipedischen Hohlraum definiert.

12. Vorrichtung zur Herstellung eines Tubenkörpers nach dem vorstehenden Anspruch, **dadurch gekennzeichnet, dass** der Kühlstab 42 eine allgemeine parallelepipedische Außenfom aufweist, die der Form der Wände der Nut 41 angepasst ist.

## Claims

1. Device for manufacturing a tube skirt from a flexible strip, comprising a frame, an elongated cylindrical mandrel 30, a means used to advance and guide this strip to place it in the form of a sleeve around the mandrel 30, one of the side edges of this strip overlapping the other side edge to form an overlap region to be welded, an internal heating means 32 located inside the mandrel 30 to heat the internal face of the overlap region, and an internal cooling means 33 located inside the mandrel 30 to cool the internal face of the overlap region and downstream from the internal heating means 32,
**characterised in that** said cooling means 33 is arranged opposite the overlap region and configured to be in direct contact with the overlap region.

2. Device for manufacturing a tube skirt according to the preceding claim, **characterised in that** said cooling means 33 is fixed in the device.

3. Device for manufacturing a tube skirt according to one of the preceding claims, **characterised in that** said cooling means 33 consists in a cooling bar 42 inserted in a corresponding groove 41 formed in the mandrel 30.

4. Device for manufacturing a tube skirt according to the preceding claim, **characterised in that** said cooling bar 42 comprises a channel 44 inside which a cooling fluid circulates.

5. Device for manufacturing a tube skirt according to the preceding claim, **characterised in that** the cooling bar 42 comprises a flat wall 43 closing the channel 44 in the upper portion and being in direct contact with the internal face of the overlap region.

6. Device for manufacturing a tube skirt according to the preceding claim, **characterised in that** said channel 44 defines a notched inner path.

7. Device for manufacturing a tube skirt according to the preceding claim, **characterised in that** said channel 44 comprises a staggered arrangement of fins 45 for guiding the cooling fluid, defining said notched inner path.

8. Device for manufacturing a tube skirt according to the preceding claim, **characterised in that** said fins 45 extend orthogonally from the flat wall 43 in the direction of the central axis Y of the mandrel 30.

9. Device for manufacturing a tube skirt according to the preceding claim, **characterised in that** said fins 45 form two staggered rows 46, 47 oriented according to a longitudinal direction parallel to the central axis Y of the mandrel 30.

10. Device for manufacturing a tube skirt according to one of the claims 7 to 9, **characterised in that** said fins 45 correspond to tabs of a rectangular appearance.

11. Device for manufacturing a tube skirt according to one of claims 3 to 10, **characterised in that** said groove 41 defines a parallelepiped hollow space.

12. Device for manufacturing a tube skirt according to the preceding claim, **characterised in that** the cooling bar 42 has a generally parallelepiped outer shape moulding the shape of the walls of said groove 41.
